# EUROPÄISCHE PATENTSCHRIFT

(11) **EP 3 842 322 B1**
(45) Veröffentlichungstag und Bekanntmachung des Hinweises auf die Patenterteilung: **28.01.2026**
(21) Anmeldenummer: 20212087.9
(22) Anmeldetag: 07.12.2020
(51) Int. Cl.: B62D 25/14, B62D 1/22

(54) **KRAFTFAHRZEUGBAUGRUPPE**
MOTOR VEHICLE MODULE
MODULE DE VÉHICULE AUTOMOBILE

(30) Priorität: 23.12.2019 AT 4072019
(43) Veröffentlichungstag der Anmeldung: 30.06.2021
(73) Patentinhaber: MAN Truck & Bus SE, 80995 München (DE)
(72) Erfinder: Stastny, Christian, 4400 Steyr (AT); Geiblinger, Christoph, 4400 Steyr (AT)
(74) Vertreter: v. Bezold & Partner Patentanwälte - PartG mbB

(56) Entgegenhaltungen:
- WO-A1-00/78591
- FR-A1- 2 765 175

## Beschreibung

Die Erfindung betrifft eine Kraftfahrzeugbaugruppe mit einer Konstruktion, vorzugsweise einer Bodenkonstruktion, mit einer ersten Lenkwellendurchführung und einer zweiten Lenkwellendurchführung.

Derartige Kraftfahrzeugbaugruppen weisen üblicherweise zwei Lenkwellendurchführungen auf, wobei für den Rechtsverkehr die linke Lenkwellendurchführung mit einer Lenkwelle besetzt wird und die rechte Lenkwellendurchführung geschlossen (zweckmäßig blindgeschlossen) wird, um ein Eindringen von Feuchtigkeit, Wasser, Schmutz etc. zu vermeiden. Für den Linksverkehr hingegen wird die rechte Lenkwellendurchführung mit einer Lenkwelle besetzt und die linke Lenkwellendurchführung wird geschlossen (zweckmäßig blindgeschlossen), um eine Eindringen von Feuchtigkeit, Wasser, Schmutz etc. zu vermeiden.

Beim Weiterentwickeln oder Modifizieren von Serien-Kraftfahrzeugen kann es notwendig sein, dass zusätzliche Leitungen, beispielsweise elektrische Leitungen, Kraftstoffleitungen und/oder Pneumatikleitungen, verlegt werden müssen. Es kann beispielsweise notwendig sein, eine oder mehrere zusätzliche Leitungen von außen in einen Rohbau eines Fahrerhauses z. B. eines Lastkraftwagens zu führen. Hierzu gibt es grundsätzlich die Möglichkeit der Verwendung der Einführungen der Serie, d.h. die Verwendung bereits vorhandener Leitungseinführungen, und das Einbringen zusätzlicher Durchbrüche in den Rohbau. Sofern alle Leitungseinführungen der Serie belegt sind, können neue Leitungseinführungen in Form von Durchbrüchen, z. B. im Bodenbereich, vorgesehen werden.

Das Einbringen zusätzlicher Durchbrüche macht jedoch eine neue Homologation, d.h. ein neues Zulassungsverfahren, des Fahrerhausrohbaus oder zumindest von Teilen davon notwendig. Dies hat jedoch insbesondere eine lange Verfahrensdauer und hohe Kosten für die Neu-Homologation zur Folge.

Als allgemeiner Stand der Technik kann z. B. das Dokument WO 00/78591 A1 genannt werden, in welchem ein Fahrersteuermodul für ein Fahrzeug und ein Verfahren zum Zusammenbauen und Installieren des Fahrersteuermoduls in dem Fahrzeug offenbart wird. Das Fahrersteuermodul umfasst die Bedienpedale, die Lenksäule und einen Großteil des Bremsbetätigungssystems des Fahrzeugs. Das Fahrersteuermodul ist dafür ausgelegt, als Einheit zusammengebaut und dann am Armaturenbrett des Fahrzeugs montiert zu werden. Eine Armaturenwand umfasst z. B. zwei Fahrersteuermodul-Öffnungen.

Der Erfindung liegt daher die Aufgabe zu Grunde, eine Kraftfahrzeugbaugruppe (z. B. Kraftfahrzeugrohbaugruppe) mit verbesserter und/oder alternativer Leitungsführung zu schaffen.

Diese Aufgabe kann durch die Merkmale des unabhängigen Anspruchs gelöst werden. Vorteilhafte Weiterbildungen der Erfindung sind in den abhängigen Ansprüchen und der folgenden Beschreibung offenbart.

Die Erfindung betrifft eine Kraftfahrzeugbaugruppe, vorzugsweise eine Kabinenbaugruppe insbesondere für ein Fahrerhaus eines Nutzfahrzeugs, z. B. eines Lastkraftwagens.

Die Kraftfahrzeugbaugruppe kann z. B. eine Kraftfahrzeugrohbaugruppe umfassen.

Die Kraftfahrzeugbaugruppe weist eine Konstruktion, vorzugsweise eine Bodenkonstruktion (z. B. einen Kabinenboden), auf. Die Konstruktion umfasst eine erste Lenkwellendurchführung (d.h. eine erste Durchführung für eine Lenkwelle) und eine zweite Lenkwellendurchführung (d.h. eine zweite Durchführung für eine Lenkwelle).

Die Kraftfahrzeugbaugruppe weist ferner eine Lenkwelle (z.B. eine Lenksäule insbesondere für ein Lenkrad) auf, die durch die erste Lenkwellendurchführung hindurchgeführt ist. Die Lenkwelle umfasst vorzugsweise ein Lenkrad zum Lenken des Kraftfahrzeugs.

Zudem weist die Kraftfahrzeugbaugruppe zumindest eine Leitung auf, die durch die zweite Lenkwellendurchführung hindurchgeführt ist.

Im Kontext der Erfindung sind insbesondere Ausführungsformen umfasst, bei denen eine Lenkwelle durch die erste Lenkwellendurchführung hindurchgeführt ist, aber keine Lenkwelle durch die zweite Lenkwellendurchführung hindurchgeführt ist, sondern die zweite Lenkwellendurchführung genutzt wird, um zumindest eine Leitung (vorzugsweise im Wesentlichen dicht) hindurchzuführen.

Dadurch können z. B. zusätzliche Durchbrüche für eine oder mehrere Leitungen vorteilhaft vermieden oder zumindest reduziert werden.

Vorteilhaft ermöglicht die Kraftfahrzeugbaugruppe, eine oder mehrere Leitungen durch die Konstruktion hindurchzuführen, ohne dass eine oder mehrere zusätzliche Durchführungen eingebracht werden müssen.

Beispielsweise kann es sich bei der Konstruktion um einen Kabinenboden eines Kabinenrohbaus (z.B. Fahrerhausrohbau) handeln. Damit ist es möglich, eine oder mehrere Leitungen zweckmäßig von außen in einen Innenraum eines Kabinenrohbaus und/oder vom Innenraum nach außen zu führen, vorteilhaft ohne hierfür einen oder mehrere neue Durchführungen einbringen zu müssen.

Vorteilhaft wird so ermöglicht, zumindest eine zusätzliche Leitung durch die Konstruktion hindurchzuführen, ohne dass eine Neu-Homologation erforderlich ist.

Beispielsweise kann im Fall, dass es sich bei der Konstruktion um einen Kabinenboden eines Kabinenrohbaus (z.B. Fahrerhausrohbau) handelt, die zweite Lenkwellendurchführung als zusätzliche Leitungsdurchführung in den Kabinenrohbau ohne Erlöschen der Homologation des Kabinenrohbaus verwendet werden.

Beispielsweise können die erste Lenkwellendurchführung und/oder die zweite Lenkwellendurchführung als Loch, vorzugsweise Durchgangsloch, ausgeführt sein.

Vorzugsweise kann die Konstruktion eine Bodenkonstruktion sein (insbesondere eine Bodenplatte, ein Bodenblech etc.). Es ist möglich, dass die Konstruktion einteilig oder mehrteilig ist.

Die mindestens eine Leitung kann zweckmäßig von einem Rahmen, beispielsweise einem Fahrgestellrahmen für das Kraftfahrzeug, durch die zweite Lenkwellendurchführung hindurch zu einem Systemträger einer Fahrerkabine hingeführt sein, oder umgekehrt. Bei dem Systemträger kann es sich z. B. um ein Frontwandmodul handeln, das durch Anbau von vorzugweise im vorderen Fahrerhausbereich angeordneten Fahrzeugteilen und Aggregaten, Elektrik und/oder Elektronik ergänzt ist.

In einer besonderen Ausführungsform ist die zumindest eine Leitung zweckmäßig im Wesentlichen dicht, bevorzugt im Wesentlichen wasserdicht, durch die zweite Lenkwellendurchführung hindurchgeführt. Damit kann ein Eindringen von Wasser, Feuchtigkeit und/oder Staub etc. durch die zweite Lenkwellendurchführung hindurch verhindert oder zumindest reduziert werden.

In einer weiteren Ausführungsform können die erste Lenkwellendurchführung und die zweite Lenkwellendurchführung im Wesentlichen spiegelsymmetrisch zu einer Mittelvertikalebene der Konstruktion angeordnet sein. Die Mittelvertikalebene kann sich vorzugsweise im Wesentlichen in Längsrichtung des Kraftfahrzeugs erstrecken.

Zusätzlich oder alternativ kann die erste Lenkwellendurchführung auf einer Fahrerseite der Konstruktion und die zweite Lenkwellendurchführung auf einer Beifahrerseite der Konstruktion angeordnet sein.

In einer weiteren Ausführungsform kann die Kraftfahrzeugbaugruppe eine Abdeckungskonstruktion aufweisen, die die zweite Lenkwellendurchführung vorzugsweise im Wesentlichen dicht abdeckt.

Die Abdeckungskonstruktion kann z. B. zumindest eine Öffnung aufweisen, durch die die zumindest eine Leitung zweckmäßig im Wesentlichen dicht hindurchgeführt sein kann.

Ein Außenumfang der Abdeckungskonstruktion kann zweckmäßig im Wesentlichen dicht, vorzugsweise im Wesentlichen wasserdicht, mit der Konstruktion verbunden sein und/oder daran im Wesentlichen dicht zweckmäßig von oben oder unten anliegen.

Es ist möglich, dass der Außenumfang der Abdeckungskonstruktion Lagerbereiche des Deckels bildet.

Vorzugsweise der Außenumfang der Abdeckungskonstruktion kann bspw. mit einem Dichtelement, beispielsweise einem aufgeschäumten Dichtelement oder einem Dichtring, versehen sein, um insbesondere einen im Wesentlichen dichten Verbund mit der Konstruktion zu erzielen.

Das vorzugsweise umlaufende Dichtelement kann vorzugsweise zwischen der Konstruktion und der Abdeckungskonstruktion, insbesondere dem Deckel, angeordnet sein.

In einer weiteren Ausführungsform kann die Abdeckungskonstruktion beispielsweise einen Deckel aufweisen. Die zumindest eine Öffnung kann z. B. im Deckel, vorzugsweise im Wesentlichen zentral, ausgebildet sein. Der Deckel kann vorzugsweise abgeschrägte Endbereiche aufweisen. Der Deckel kann z. B. mindestens eine radiale Versteifungsrippe aufweisen. Der Deckel kann insbesondere eine ovale Außenform aufweisen.

Des Weiteren kann der Deckel eine Länge im Bereich von z. B. 190 mm bis 230 mm und/oder eine Breite im Bereich von 140 mm bis 180 mm aufweisen.

Es ist möglich, dass eine Außenkante der Öffnung und/oder eine Außenkante des Deckels verdickt ausgebildet sind. Diese Ausbildung kann, wie auch radiale Versteifungsrippen, zu einer höheren Steifigkeit und höheren Stabilität des Deckels beitragen.

Bei dem Deckel kann es sich z. B. um einen Seriendeckel handeln, der allerdings modifiziert ist. Der ursprüngliche Seriendeckel dient zum Verschluss der zweiten Lenkwellendurchführung (z.B. Blinddeckel), allerdings ohne Hindurchführung mindestens einer Leitung. Der Deckel kann insbesondere dahingehend modifiziert sein, dass er zumindest eine Öffnung für die mindestens eine Leitung aufweist.

Im Kontext der Erfindung können die Abdeckungskonstruktion und die Konstruktion über ein Spannelement (z. B. ein Gegenhalter) gegeneinander, vorzugsweise im Wesentlichen dicht, verspannt sein, vorzugsweise zum Herstellen einer im Wesentlichen dichten, insbesondere im Wesentlichen wasserdichten, Verbindung zwischen der Konstruktion und der Abdeckungskonstruktion.

Es ist möglich, dass das Dichtelement mittels des Spannelements gepresst wird, um die Dichtwirkung zu erhöhen.

Das Spannelement dient insbesondere dazu, die Abdeckungskonstruktion und die Konstruktion gegeneinander zu verspannen.

Es ist möglich, dass die zumindest eine Leitung durch das Spannelement hindurchgeführt ist. Vorzugsweise kann die Abdeckungskonstruktion zwischen dem Spannelement und der Konstruktion im Wesentlichen dicht, vorzugsweise im Wesentlichen wasserdicht, eingespannt sein. Alternativ oder ergänzend können die Abdeckungskonstruktion und das Spannelement auf entgegengesetzten Seiten der Konstruktion angeordnet und vorzugsweise zum Abdichten zwischen der Abdeckungskonstruktion und der Konstruktion miteinander verspannt sein.

Das Spannelement und die Abdeckungskonstruktion können jeweils Befestigungsöffnungen aufweisen und anhand von Befestigungsmitteln (z.B. Schrauben), die in den Befestigungsöffnungen eingesetzt sind, miteinander verbunden sein.

In einer weiteren Ausführungsvariante kann das Spannelement eine z. B. eine Gerippestruktur aufweisende Kreuzform umfassen.

Ein Längsbalken des Spannelements kann z. B. länger als ein Querbalken des Spannelements ausgebildet sein. Allerdings sind auch z. B. Ausführungsformen möglich, bei denen der Längsbalken und der Querbalken zumindest im Wesentlichen gleich lang ausgebildet sind.

Enden des Längsbalkens können verbreitert und/oder nach außen hin abgerundet ausgebildet sein.

Enden des Längsbalkens können an eine Kontur der zweiten Lenkwellendurchführung angepasst sein. Alternativ oder ergänzend können Enden des Längsbalkens angewinkelt ausgebildet sein.

Enden des Querbalkens können jeweils einen im Wesentlichen konischen oder im Wesentlichen U-förmigen Vorsprung aufweisen.

Im Abschnitt, in dem sich der Längs- und Querbalken kreuzen, kann mindestens eine Aussparung zur Hindurchführung der mindestens einen Leitung ausgebildet sein.

Zudem kann das Spannelement in einer Gerippestruktur ausgeführt sein.

Wie beschrieben, können die Endbereiche des Deckels zweckmäßig angewinkelt ausgebildet sein. Beispielsweise kann der Deckel einen ersten im Wesentlichen horizontalen Endbereich, einen dazu angewinkelten Mittelbereich und einen zweiten im Wesentlichen horizontalen Endbereich aufweisen. Die Endbereiche können vorzugsweise den Außenumfang des Deckels bilden und/oder Lagerbereiche des Deckels bilden.

Der Deckel kann so ausgebildet sein, im Wesentlichen dicht, vorzugsweise im Wesentlichen wasserdicht, mit der Konstruktion verbunden zu sein (z.B. abzuschließen) und/oder die zweite Lenkwellendurchführung abzudecken.

Der Längsbalken kann eine Länge im Bereich von 185 mm bis 225 mm und/oder einer Breite im Bereich von 25 mm bis 35 mm aufweisen. Die Endbereiche der Längsbalken können eine Breite im Bereich von 95 mm bis 135 mm aufweisen. Der Querbalken kann eine Länge im Bereich von 125 mm bis 165 mm und/oder einer Breite im Bereich von 25 mm bis 35 mm aufweisen, wobei sich die Breite aufgrund der Vorsprünge an den Querbalken um 10 mm bis 25 mm verbreitern kann.

In einer weiteren Ausführungsform kann das Spannelement als ein Rahmen, vorzugsweise mit einer ovalen Form, ausgebildet sein.

Endbereiche des Spannelements können angewinkelt ausgebildet sein.

Endbereiche des Spannelements können eine Gerippestruktur aufweisen.

Längsseiten des Spannelements können jeweils einen im Wesentlichen konischen oder im Wesentlichen U-förmigen Vorsprung aufweisen.

In einer Öffnung des Spannelements kann z. B. eine Versteifungsstrebe ausgebildet sein.

Die mindestens eine Leitung kann durch die Öffnung des Spannelements hindurchgeführt sein.

Wie beschrieben, können die Endbereiche des Spannelements zweckmäßig angewinkelt ausgebildet sein. Beispielsweise kann das Spannelement einen ersten im Wesentlichen horizontalen Endbereich, einen angewinkelten Mittelbereich und einen zweiten im Wesentlichen horizontalen Endbereich aufweisen. Die Endbereiche können vorzugsweise den Außenumfang des Deckels bilden und/oder Lagerbereiche des Deckels bilden.

Das Spannelement kann so ausgebildet sein, im Wesentlichen dicht, vorzugsweise im Wesentlichen wasserdicht, mit der Konstruktion verbunden zu sein (z.B. abzuschließen) und/oder die zweite Lenkwellendurchführung abzudecken.

In einer weiteren Ausführungsform kann die Abdeckungskonstruktion zusätzlich ein (z. B. im Wesentlichen Käfig-förmiges, Kasten-förmiges etc.) Gehäuse aufweisen, durch das die zumindest eine Leitung zweckmäßig hindurchgeführt sein kann.

Das Gehäuse kann z. B. zumindest teilweise aus Kunststoff und/oder Metall hergestellt sein.

Das Gehäuse kann z. B. zumindest teilweise aus Metall, vorzugsweise aus Aluminium, besonders bevorzugt aus Aluminiumdruckguss, hergestellt sein.

Das Gehäuse kann zudem zumindest teilweise im Wesentlichen quaderförmig ausgebildet sein.

Alternativ oder ergänzend kann das Gehäuse an einer der zweiten Lenkwellendurchführung zugewandten Seite offen ausgebildet sein und/oder von der Abdeckungskonstruktion, z. B. dem Deckel und/oder dem Spannelement, nach unten abstehen.

Das Gehäuse kann an einem der zweiten Lenkwellendurchführung zugewandten Ende zumindest einen seitlich auskragenden Vorsprung (z.B. Kragen oder Kragenabschnitt) aufweisen, der zwischen z. B. einer Unterseite des Spannelements und z. B. einer Oberseite des Deckels aufgenommen ist, z. B. eingespannt, insbesondere im Wesentlichen dicht, vorzugsweise im Wesentlichen wasserdicht.

Im Kontext der Erfindung meint der Begriff "dicht" vorzugsweise zumindest im Wesentlichen dicht gegenüber Wasser und/oder Feuchtigkeit (z. B. Spritzwasser, aufgewirbeltes Wasser etc.).

Der Deckel kann im Vergleich zum üblicherweise als Blinddeckel ausgebildeten Serien-/Originaldeckel modifiziert sein.

An das Gehäuse, das z. B. aus Kunststoff und/oder Metall, besonders bevorzugt aus z. B. Aluminium, insbesondere Aluminiumdruckguss hergestellt sein kann, kann insbesondere eine besonders schwere Leitung angeschlossen werden. Das Gehäuse bildet somit vorteilhaft eine tragfähige Anschlusskonstruktion für zumindest eine Leitung, die insbesondere sehr schwer ausgebildet sein kann.

In einer weiteren Ausführungsvariante kann die zumindest eine Leitung in einem Mantel (z. B. Schlauch) von unten zur Abdeckungskonstruktion geführt sein. Der Mantel kann an die Abdeckungskonstruktion vorzugsweise lösbar angeschlossen sein.

In einer weiteren Ausführungsvariante kann der Mantel mittels einer Verbindungskonstruktion an der Abdeckungskonstruktion vorzugsweise lösbar angeschlossen sein, z. B. mittels einer Schraub-, Bajonett-, Steck-, Rast- und/oder Schnappverbindung.

Die Verbindungskonstruktion kann im Wesentlichen dicht, vorzugsweise im Wesentlichen wasserdicht, mit der Abdeckungskonstruktion verbunden sein.

Beispielsweise kann ein Anschlussstutzen an der Abdeckungskonstruktion ausgebildet sein. Der Mantel kann mittels der Verbindungskonstruktion am Anschlussstutzen angeschlossen sein. Die Verbindungskonstruktion kann im Wesentlichen dicht, vorzugsweise im Wesentlichen wasserdicht, mit dem Anschlussstutzen verbunden sein.

In einer weiteren Ausführungsform kann die mindestens eine Leitung zumindest eine elektrische Leitung (z. B. Steuerleitung und/oder Energiezuführleitung), zumindest eine Kraftstoffleitung und/oder zumindest eine Pneumatikleitung umfassen kann.

In einer weiteren Ausführungsvariante kann die zweite Lenkwellendurchführung frei von einer Lenkwelle sein.

In einer weiteren Ausführungsform kann die Kraftfahrzeugbaugruppe eine (z.B. plattenförmig ausgebildete) vorzugsweise als Trittschutz ausgebildete Schutzabdeckung aufweisen. Die Schutzabdeckung kann die mindestens eine durch die zweite Lenkwellendurchführung hindurchgeführte Leitung und/oder die Abdeckungskonstruktion schützend abdecken (z.B. von oben). Vorzugsweise kann die Schutzabdeckung an der Abdeckungskonstruktion angebracht (z.B. verschraubt) sein und/oder die Abdeckungskonstruktion überspannen.

Die Schutzabdeckung und die Abdeckungskonstruktion können jeweils Befestigungsöffnungen aufweisen und anhand von Befestigungsmitteln (z.B. Schrauben), die in den Befestigungsöffnungen eingesetzt sind, miteinander verbunden sein. Die Schutzabdeckung kann beispielsweise über eine Stirnwand eines Systemträgers angebracht sein.

Handelt es sich beispielsweise bei der Konstruktion um einen Kabinenboden eines Kabinenrohbaus (z.B. Fahrerhausrohbau), so kann die Schutzabdeckung vorzugsweise als Trittschutz dienen.

In einer weiteren Ausführungsvariante kann die Konstruktion einen ersten (zweckmäßig im Wesentlichen horizontalen) Abschnitt, einen zweiten (zweckmäßig im Wesentlichen horizontalen) Abschnitt, und einen z. B. im Wesentlichen schrägen Abschnitt aufweisen. Der vorzugsweise im Wesentlichen schräge Abschnitt kann zwischen dem ersten Abschnitt und dem zweiten Abschnitt angeordnet sein.

Die erste Lenkwellendurchführung und/oder die zweite Lenkwellendurchführung kann zumindest abschnittsweise im ersten Abschnitt, im schrägen Abschnitt und/oder im zweiten Abschnitt ausgebildet sein.

Es ist möglich, dass der Deckel, das Spannelement und/oder das Gehäuse auf dem ersten Abschnitt und dem zweiten Abschnitt vorzugsweise mit seinem Außenumfang, z. B. seinem Endbereich, gelagert ist und/oder vorzugsweise den angewinkelten Abschnitt überspannt.

Zu erwähnen ist, dass die zweite Lenkwellendurchführung insbesondere im Rohbau der Kraftfahrzeugbaugruppe vorzugsweise zur Durchführung einer Lenkwelle ausgebildet ist, im Kontext der Erfindung aber insbesondere nicht wie im Stand der Technik üblich, ungenutzt geschlossen wird, sondern vorteilhaft als Leitungsdurchführung genutzt werden kann.

Zu erwähnen ist auch, dass die Gerippestruktur wie hierin erwähnt vorzugsweise durch Rippen und Durchlassöffnungen gebildet werden kann, wodurch vorteilhaft insbesondere einerseits eine stabile und andererseits eine leichtgewichtige Struktur erzielt werden kann.

Die erste Lenkwellendurchführung kann z. B. eine linke Lenkwellendurchführung sein und/oder die zweite Lenkwellendurchführung kann z. B. eine rechte Lenkwellendurchführung sein oder umgekehrt.

Gemäß einem weiteren Aspekt wird ein Kraftfahrzeug, vorzugweise ein Nutzfahrzeug, mit einer Kraftfahrzeugbaugruppe wie hierin offenbart bereitgestellt.

Die zuvor beschriebenen Ausführungsformen, Ausführungsbeispiele und Merkmale der Erfindung sind zweckmäßig miteinander kombinierbar. Weitere Einzelheiten und Vorteile der Erfindung werden im Folgenden unter Bezug auf die beigefügten Zeichnungen beschrieben. Es zeigen:
Figur 1 eine stark schematisierte Ansicht eines Ausschnitts einer Konstruktion, vorzugsweise einer Bodenkonstruktion;
Figur 2 eine schematische Darstellung einer durch eine erste Lenkwellendurchführung hindurchgeführte Lenkwelle;
Figur 3 eine schematische Untersicht einer Abdeckungskonstruktion;
Figur 4 eine schematische Seitenansicht einer Abdeckungskonstruktion mit der mindestens einen hindurchgeführten Leitung;
Figur 5 eine schematische Ansicht eines Spannelements;
Figur 6 eine schematische Seitenansicht der Abdeckungskonstruktion und des Spannelements mit der mindestens einen hindurchgeführten Leitung;
Figur 7 eine schematische Ansicht des Spannelements und der Abdeckungskonstruktion;
Figur 8 eine schematische Ansicht des Spannelements; und
Figur 9 eine Draufsicht einer Schutzabdeckung.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen oder Figuren verwiesen werden kann.

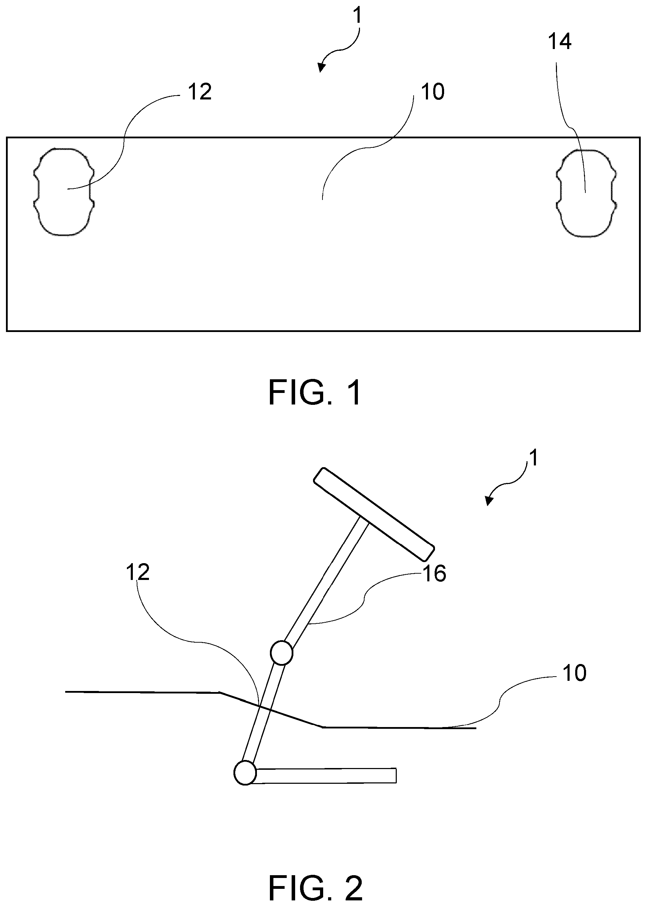

Figur 1 zeigt eine stark schematisierte Ansicht eines Ausschnitts einer Kraftfahrzeugbaugruppe 1 mit einer Konstruktion 10, vorzugsweise einer Bodenkonstruktion. Die Konstruktion 10 ist vorzugsweise als ein Bodenbereich eines Fahrerhauses (z. B. einer Fahrerkabine) eines Nutzfahrzeugs, vorzugsweise eines Lastkraftwagens, ausgeführt. Die Konstruktion 10 kann einteilig oder mehrteilig sein.

Die Konstruktion 10 weist insbesondere im Rohbau eine erste Lenkwellendurchführung 12 und eine zweite Lenkwellendurchführung 14 auf.

Die erste Lenkwellendurchführung 12 und die zweite Lenkwellendurchführung 14 sind in der Konstruktion 10 ausgebildet. Dabei können die erste Lenkwellendurchführung 12 und die zweite Lenkwellendurchführung 14 bspw. spiegelsymmetrisch zu einer Mittelvertikalebene der Konstruktion 10 angeordnet sein. Die erste Lenkwellendurchführung 12 ist auf einer Fahrerseite der Konstruktion 10 und die zweite Lenkwellendurchführung 14 ist auf einer Beifahrerseite der Konstruktion 10 angeordnet.

Die erste Lenkwellendurchführung 12 und die zweite Lenkwellendurchführung 14 können jeweils bspw. eine im Wesentlichen ovale Kontur auf.

Figur 2 zeigt eine schematische Darstellung einer durch die erste Lenkwellendurchführung 12 der Konstruktion 10 hindurchgeführten Lenkwelle (z. B. Lenksäule etc.) 16 für ein Lenkrad zum Lenken des Kraftfahrzeugs.

Die Lenkwelle 16 ist auf der Fahrerseite durch die erste Lenkwellendurchführung 12 hindurchgeführt.

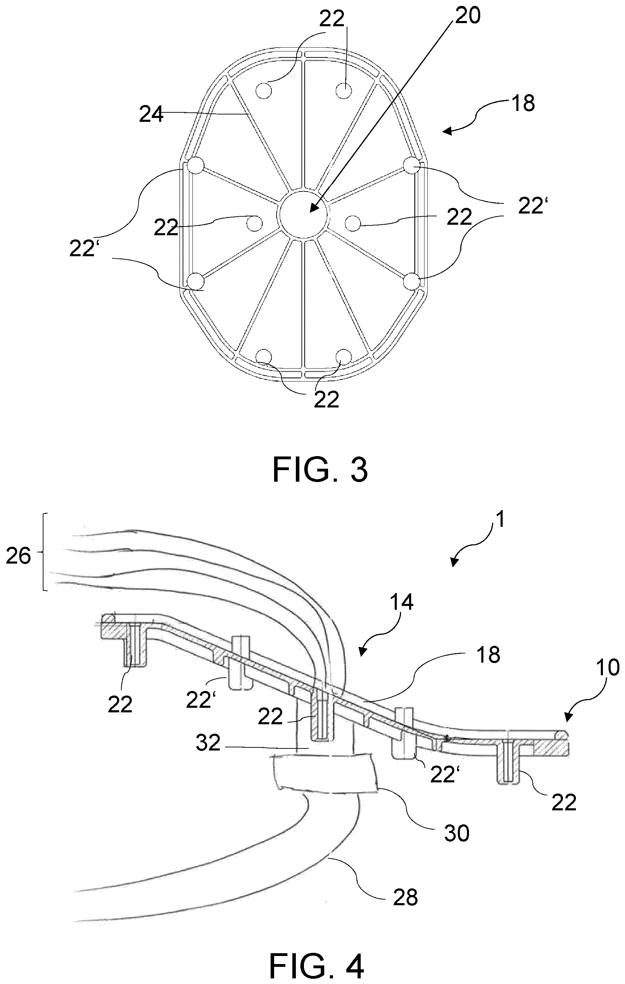

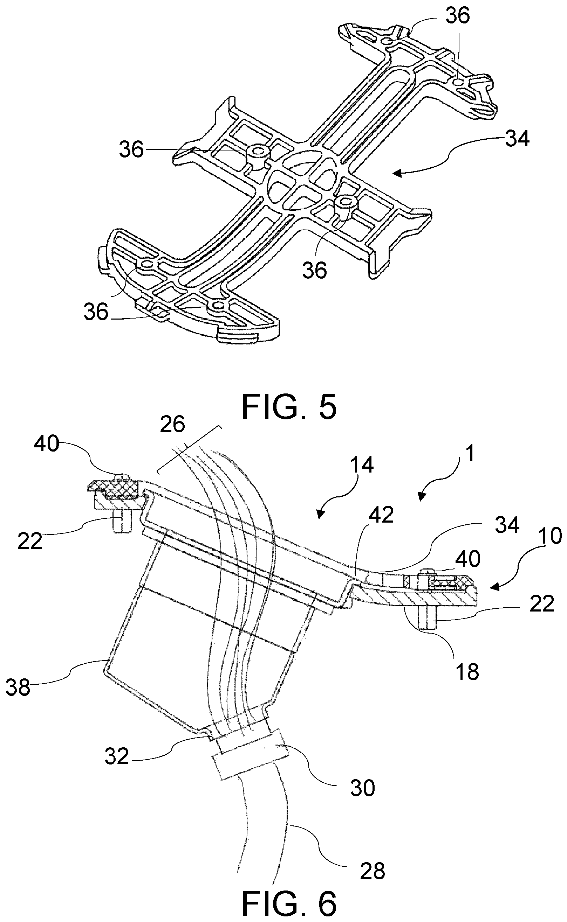

In der zweiten Lenkwellendurchführung 14 ist keine Lenkwelle eingesetzt. Ebenfalls ist die zweite Lenkwellendurchführung 14 auch nicht durch einen Blinddeckel vollständig verschlossen. Vielmehr ist zumindest eine Leitung 26 (z. B. Figuren 4 und 6) durch die zweite Lenkwellendurchführung 14 vorzugsweise im Wesentlichen dicht hindurchgeführt.

Figur 3 zeigt eine schematische Ansicht von unten auf eine Abdeckungskonstruktion zum Abdecken der zweiten Lenkwellendurchführung 14 und zum Hindurchführen der zumindest einen Leitung 26.

Die Abdeckungskonstruktion weist einen Deckel 18 auf. Der Deckel 18 weist eine bspw. im Wesentlichen ovale Außenform und eine im Wesentlichen zentral angeordnete Öffnung 20 auf. Durch die Öffnung 20 kann die mindestens eine Leitung 26 hindurchgeführt sein. Zusätzlich sind mehrere Befestigungsöffnungen 22, 22' im Deckel 18 ausgebildet. Der Deckel 18 weist bspw. radiale Versteifungsrippen 24 auf. Dabei können die Versteifungsrippen 24 ausgehend von der Öffnung 20 radial nach außen verlaufen. Zusätzlich kann eine umlaufende Außenkante der Öffnung 20 und/oder eine Außenkante des Deckels 18 verdickt ausgebildet sein, um ebenfalls eine Versteifungsrippe bilden zu können.

Figur 4 zeigt eine schematische Seitenansicht der Abdeckungskonstruktion für die zweite Lenkwellendurchführung 14 mit der mindestens einen hindurchgeführten Leitung 26.

Die Abdeckungskonstruktion weist den Deckel 18 auf. Die Endbereiche des Deckels 18 können bezüglich eines Mittelbereichs des Deckels 18 angewinkelt sein. Beispielsweise kann der Deckel 18 einen ersten im Wesentlichen horizontalen Endbereich, einen dazu angewinkelten Mittelbereich und einen zweiten im Wesentlichen horizontalen Endbereich aufweisen. Der Deckel 18 kann somit an eine entsprechende Form der zweiten Lenkwellendurchführung 14 und der Konstruktion 10 angepasst sein. Der Deckel 18 ist dazu ausgebildet, im Wesentlichen dicht, vorzugsweise im Wesentlichen wasserdicht, mit der Konstruktion 10 verbunden zu sein, dass die zweite Lenkwellendurchführung 14 zweckmäßig dicht abgedeckt werden kann. Der Deckel 18 kann z. B mehrere Befestigungsöffnungen 22, 22' aufweisen.

Am Deckel 18 kann ein Anschlussmittel, z. B. ein Anschlussstutzen 32 ausgebildet sein.

Die zumindest eine Leitung 26 kann in einem Mantel 28 (z. B. einem Schlauch oder einer anderen geeigneten Umhüllung) zweckmäßig z. B. von unten oder von oben zur zweiten Lenkwellendurchführung 14 geführt sein. Der Mantel 28 weist eine Verbindungskonstruktion 30 auf. Die Verbindungskonstruktion 30 ist im Wesentlichen dicht, bevorzugt im Wesentlichen wasserdicht, am Anschlussstutzen 32 vorzugsweise lösbar angebracht, z. B. mittels eines einer Schraub-, Bajonett-, Steck-, Rast-, und/oder Schnappverbindung. Der Mantel 28 kann somit vorzugsweise am Anschlussstutzen 32 enden. Die zumindest eine Leitung 26 kann hingegen durch den Mantel 28, den Deckel 18 und die zweite Lenkwellendurchführung 14 hindurchgeführt sein.

Figur 5 zeigt eine schematische Ansicht eines Spannelements 34. Das Spannelement 34 kann zum Verspannen des Deckels 18 an der Konstruktion 10 ausgeführt sein. Vorzugsweise kann so eine insbesondere spannungsbeaufschlagte Abdichtung zwischen der Abdeckungskonstruktion und der Konstruktion 10 erzielt werden.

Das Spannelement 34 kann z. B. eine im Wesentlichen Kreuzform aufweisen, wobei ein Längsbalken länger als ein Querbalken ausgebildet sein kann. Die Längsbalkenenden sind verbreitert und z. B. nach außen hin abgerundet ausgebildet. Zudem sind Längsbalkenenden abgeschrägt ausgebildet. Die Querbalkenenden weisen jeweils einen im Wesentlichen konischen oder im Wesentlichen U-förmigen Vorsprung auf.

Im Abschnitt, in dem sich der Längs- und Querbalken kreuzen, weist das Spannelement 34 mindestens eine Aussparung auf, um zweckmäßig die mindestens eine Leitung 26 hindurchführen zu können.

Das Spannelement 34 ist in einer Gerippestruktur ausgeführt. Damit kann beispielsweise eine feste und zugleich leichte Konstruktion 10 erzielt werden.

Zudem weist das Spannelement 34 mehrere Befestigungsöffnungen 36 auf. Bei der Befestigung des Spannelements 34 an der Konstruktion 10 und/oder dem Deckel 18 können die Befestigungsöffnungen 36 des Spannelements 34 mit den Befestigungsöffnungen 22 des Deckels 18 fluchten oder damit ausgerichtet sein, sodass Befestigungselemente 40, beispielsweise Schrauben, zur Befestigung in den Befestigungsöffnungen 22, 36 eingesetzt (z. B. eingeschraubt) werden können. Beispielsweise kann der Deckel 18 zwischen dem Spannelement 34 und der Konstruktion 10, im Wesentlichen dicht, vorzugsweise im Wesentlichen wasserdicht, eingespannt sein. Es ist auch möglich, dass das Spannelement 34 und der Deckel 18 auf entgegengesetzten Seiten der Konstruktion 10 angeordnet sind, und im Wesentlichen dicht, vorzugsweise im Wesentlichen wasserdicht, mit der Konstruktion 10 verspannt sind.

Figur 6 zeigt eine schematische Seitenansicht der Abdeckungskonstruktion und des Spannelements 34 mit der mindestens einen hindurchgeführten Leitung 26.

Die Abdeckungskonstruktion weist erneut einen Deckel 18 auf. Die Endbereiche des Deckels 18 sind angewinkelt. Der Deckel 18 ist zweckmäßig erneut ausgebildet, im Wesentlichen dicht, vorzugsweise im Wesentlichen wasserdicht, mit der Konstruktion 10 verbunden zu sein und die zweite Lenkwellendurchführung 18 zweckmäßig dicht abzudecken.

Der Deckel 18 ist mittels Befestigungselementen 40 mit dem Spannelement 34 verbunden. Die Befestigungselemente 40 sind dabei in den Befestigungsöffnungen 36 des Spannelements 34 und den Befestigungsöffnungen 22 des Deckels 18 eingesetzt.

Die Abdeckungskonstruktion weist zusätzlich ein Gehäuse 38 auf. Das Gehäuse 38 weist eine zumindest teilweise im Wesentlichen quaderförmige Form auf, wobei eine der zweiten Lenkwellendurchführung 14 zugewandten Seite des Gehäuses 38 offen ausgebildet ist. Des Weiteren steht das Gehäuse 38 vom Deckel 18 mittelbar oder unmittelbar nach unten ab, und weist am oberen Ende zumindest einen seitlich auskragenden Vorsprung 42 auf, der zwischen einer Unterseite des Spannelements 34 und einer Oberseite des Deckels 18 im Wesentlichen dicht, vorzugsweise im Wesentlichen wasserdicht, aufgenommen ist.

Zudem ist am Gehäuse 38 ein Anschlussmittel, z. B. ein Anschlussstutzen 32 ausgebildet.

Die zumindest eine Leitung 26 ist in dem Mantel 28 von unten zur Abdeckungskonstruktion geführt. Der Mantel 28 weist eine Verbindungskonstruktion 30 auf, die im Wesentlichen dicht, bevorzugt im Wesentlichen wasserdicht, am Anschlussstutzen 32 angebracht ist. Die zumindest eine Leitung 26 ist durch den Mantel 28, das Gehäuse 38, den Deckel 18 und das Spannelement 34 hindurchgeführt.

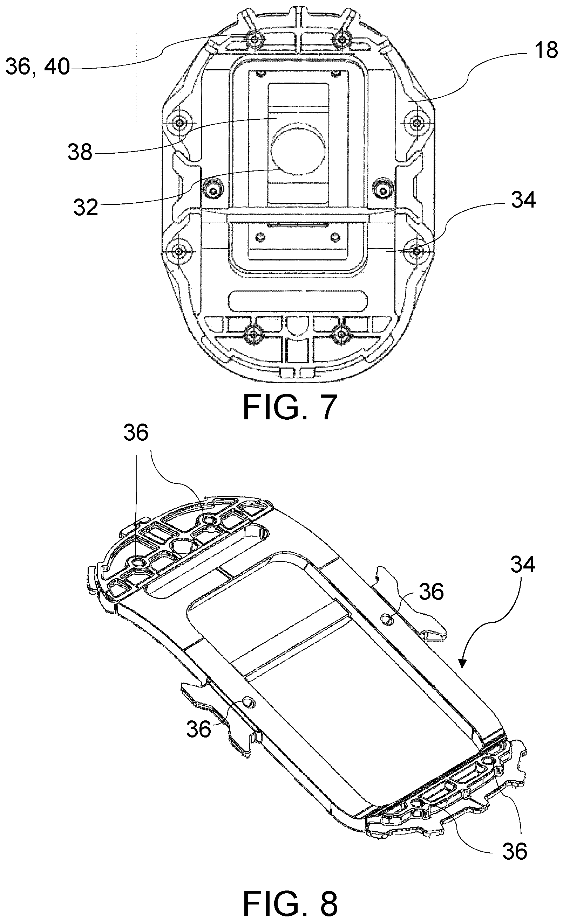

Figur 7 zeigt eine schematische Draufsicht des Spannelements 34 und der Abdeckungskonstruktion.

Das Spannelement 34 ist mittels der Befestigungselemente 40, die in den Befestigungsöffnungen 36 eingesetzt sind, mit dem Deckel 18 verbunden. Zu erkennen ist zudem das Gehäuse 38 mit dem Anschlussstutzen 32 bzw. der Öffnung des Anschlussstutzens 32.

Figur 8 zeigt eine schematische Ansicht des Spannelements 34.

Das Spannelement 34 ist hier als Rahmen mit im Wesentlichen ovaler Außenform ausgebildet. Die Endbereiche des Spannelements 34 sind angewinkelt ausgebildet. Das Spannelement 34 weist zudem mehrere Befestigungsöffnungen 36 auf. Des Weiteren ist in einer Öffnung des Spannelements 34, d.h. der durch die Rahmenform gebildete Öffnung, eine Versteifungsstrebe ausgebildet, z. B. zur Versteifung des Spannelements 34.

Die Endbereiche des Spannelements 34 weisen jeweils eine Gerippestruktur auf. Zudem weist das Spannelement 34 an den Längsseiten jeweils einen im Wesentlichen konischen Vorsprung auf. Das Spannelement 34 kann bspw. auch ohne diese Vorsprünge und/oder ohne die Gerippestruktur der Endbereiche ausgebildet sein.

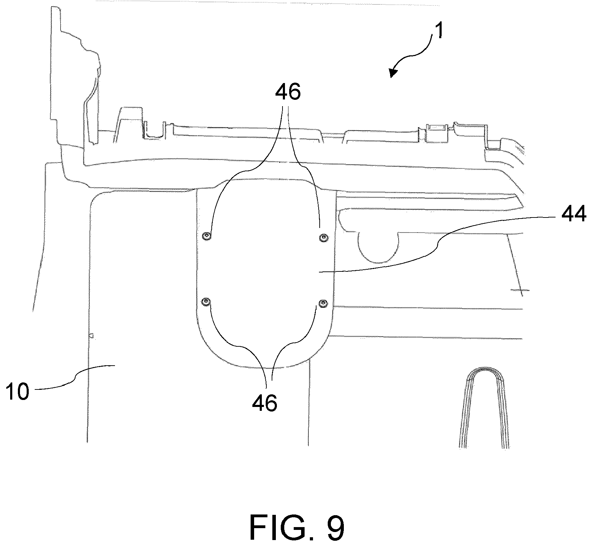

Figur 9 zeigt eine Draufsicht einer Schutzabdeckung 44.

Die vorzugsweise als Trittschutz ausgebildete Schutzabdeckung 44 kann im Wesentlichen plattenförmig ausgebildet sein, wobei mindestens zwei Ecken z. B. abgerundet sein können.

Die Schutzabdeckung 44 ist mittels der Befestigungselemente 46 mit der Konstruktion 10 und/oder der Abdeckungskonstruktion verbunden. Beispielsweise können die Befestigungselemente 46 in den Befestigungsöffnungen 22' des Deckels 18 eingesetzt, z. B. eingeschraubt, sein.

Die Schutzabdeckung 44 ist insbesondere ausgeführt, um die mindestens eine durch die zweite Lenkwellendurchführung 14 hindurchgeführte Leitung 26 und/oder die Abdeckungskonstruktion schützend abzudecken.

Zu erwähnen ist noch, dass die zumindest eine Leitung 26 z. B. zumindest eine elektrische Leitung, zumindest eine Kraftstoffleitung und/oder zumindest eine Pneumatikleitung umfassen kann. Die eine oder die mehreren Leitungen 26 sind vorzugsweise mittels des Mantels 28 zur zweiten Lenkwellendurchführung 14, insbesondere dessen Abdeckungskonstruktion, geführt. Da die zumindest eine Leitung 26 relativ schwer ausgeführt sein kann, kann der Mantel 28 eine Trag-/Verstärkungsfunktion für die zumindest eine Leitung 26 zur Verfügung stellen und ausgeführt sein, um seine Traglast z. B. an die Abdeckungskonstruktion abzuführen.

Im Kontext der Erfindung kann die zweite Lenkwellendurchführung 14 zweckmäßig im Kabinenboden der Kraftfahrzeugbaugruppe 1 an der fahrerabgewandten Seite (zweckmäßig Beifahrerseite) als Leitungsdurchführung für die zumindest eine Leitung 26 verwendet werden und zwar vorzugsweise ohne Zerstörung der Homologation des Kabinenrohbaus. Es kann vorteilhaft sogar der ursprüngliche Blinddeckel zum Verschließen der zweiten Lenkwellendurchführung 14 genutzt werden, allerdings in modifizierter Form mit zumindest einer Öffnung zur Durchführung der zumindest einen Leitung 26. Die zumindest eine Leitung 26 kann z. B. durch den Deckel 18, das Spannelement 34 und/oder das Gehäuse 38 und die zweite Lenkwellendurchführung 14 hindurchgeführt werden und z. B. in einem Systemträger münden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Konstruktion, vorzugsweise Bodenkonstruktion
- 12: Erste Lenkwellendurchführung
- 14: Zweite Lenkwellendurchführung
- 16: Lenkwelle
- 18: Deckel
- 20: Öffnung
- 22, 22': Befestigungsöffnung
- 24: Versteifungsrippe
- 26: Leitung(en)
- 28: Mantel, z. B. Schlauch
- 30: Verbindungskonstruktion
- 32: Anschlussmittel, insbesondere Anschlussstutzen
- 34: Spannelement
- 36: Befestigungsöffnung
- 38: Gehäuse
- 40: Befestigungselement
- 42: Vorsprung
- 44: Schutzabdeckung, vorzugsweise Trittschutz
- 46: Befestigungselement
- 1: Kraftfahrzeugbaugruppe

## Patentansprüche

1. Kraftfahrzeugbaugruppe (1), vorzugsweise Kabinenbaugruppe, aufweisend:
eine Konstruktion (10), vorzugsweise eine Bodenkonstruktion, mit einer ersten Lenkwellendurchführung (12) und einer zweiten Lenkwellendurchführung (14);
eine Lenkwelle (16), die durch die erste Lenkwellendurchführung (12) hindurchgeführt ist;
zumindest eine Leitung (26), die durch die zweite Lenkwellendurchführung (14) hindurchgeführt ist; und
- eine Abdeckungskonstruktion (18, 38), die die zweite Lenkwellendurchführung (14) abdeckt, wobei die Abdeckungskonstruktion (18, 38) zumindest eine Öffnung (20), durch die die zumindest eine Leitung (26) hindurchgeführt ist, aufweist,
- wobei die Abdeckungskonstruktion (18, 38) und die Konstruktion (10) über ein Spannelement (34) gegeneinander, vorzugsweise dicht, verspannt sind, und
- wobei die zumindest eine Leitung (26) durch das Spannelement (34) hindurchgeführt ist und/oder wobei die zumindest eine Leitung (26) in einem Mantel (28) zur Abdeckungskonstruktion (18, 38) geführt ist, wobei der Mantel (28) an die Abdeckungskonstruktion (18,38) vorzugsweise lösbar angeschlossen ist.

2. Kraftfahrzeugbaugruppe (1) nach Anspruch 1, wobei die zumindest eine Leitung (26) dicht durch die zweite Lenkwellendurchführung (14) hindurchgeführt ist.

3. Kraftfahrzeugbaugruppe (1) nach Anspruch 1 oder Anspruch 2, wobei:
die erste Lenkwellendurchführung (12) und die zweite Lenkwellendurchführung (14) spiegelsymmetrisch zu einer Mittelvertikalebene der Konstruktion (10) angeordnet sind, und/oder
die erste Lenkwellendurchführung (12) auf einer Fahrerseite der Konstruktion (10) und die zweite Lenkwellendurchführung (14) auf einer Beifahrerseite der Konstruktion (10) angeordnet sind.

4. Kraftfahrzeugbaugruppe (1) nach einem der vorhergehenden Ansprüche,
wobei ein Außenumfang der Abdeckungskonstruktion (18, 38) dicht mit der Konstruktion (10) verbunden ist und/oder dicht an der Konstruktion (10) anliegt.

5. Kraftfahrzeugbaugruppe (1) nach einem der vorhergehenden Ansprüche, wobei die Abdeckungskonstruktion (18, 38) einen Deckel (18) aufweist, wobei:
die zumindest eine Öffnung (20) in dem Deckel (18), vorzugsweise zentral, ausgebildet ist, und/oder
der Deckel (18) angewinkelte Endbereiche aufweist, und/oder der Deckel (18) mindestens eine radiale Versteifungsrippe (24) aufweist.

6. Kraftfahrzeugbaugruppe (1) nach einem der vorhergehenden Ansprüche, wobei :
die Abdeckungskonstruktion (18, 38) zwischen dem Spannelement (34) und der Konstruktion (10) eingespannt ist, vorzugsweise dicht; oder
die Abdeckungskonstruktion (18, 38) und das Spannelement (34) auf entgegengesetzten Seiten der Konstruktion (10) angeordnet und vorzugsweise zum Abdichten zwischen der Abdeckungskonstruktion (18, 38) und der Konstruktion (10) miteinander verspannt sind.

7. Kraftfahrzeugbaugruppe (1) nach einem der vorhergehenden Ansprüche, wobei das Spannelement (34) eine Kreuzform mit einem Längsbalken und einem Querbalken aufweist, wobei vorzugsweise:
der Längsbalken länger als der Querbalken ist, und/oder
Enden des Längsbalkens verbreitert und/oder nach außen hin abgerundet ausgebildet sind, und/oder
Enden des Längsbalkens an eine Kontur der zweiten Lenkwellendurchführung (14) angepasst sind; und/oder
Enden des Längsbalkens angewinkelt ausgebildet sind, und/oder
Enden des Querbalkens jeweils einen konischen oder U-förmigen Vorsprung aufweisen, und/oder
in einem Abschnitt, in dem sich der Längsbalken und der Querbalken kreuzen, mindestens eine Aussparung zur Hindurchführung der mindestens einen Leitung (26) ausgebildet ist, und/oder
das Spannelement (34) eine Gerippestruktur umfasst;
oder
wobei das Spannelement (34) als ein Rahmen, vorzugsweise mit einer ovalen Form, ausgebildet ist, wobei vorzugsweise:
Endbereiche des Spannelements (34) angewinkelt ausgebildet sind, und/oder
Endbereiche des Spannelements (34) eine Gerippestruktur aufweisen, und/oder
Längsseiten des Spannelements (34) jeweils einen konischen oder U-förmigen Vorsprung aufweisen, und/oder
in einer Öffnung des Spannelements (34) eine Versteifungsstrebe ausgebildet ist, und/oder
das Spannelement (34) eine Gerippestruktur umfasst.

8. Kraftfahrzeugbaugruppe (1) nach einem der vorangegangenen Ansprüche, wobei die Abdeckungskonstruktion (18, 38) ein Gehäuse (38) aufweist, durch das die zumindest eine Leitung (26) hindurchgeführt ist, wobei das Gehäuse (38) vorzugsweise:
an einer der zweiten Lenkwellendurchführung (14) zugewandten Seite offen ausgebildet ist, und/oder
von der Abdeckungskonstruktion (18, 38) vorzugsweise nach unten absteht, und/oder
an einem der zweiten Lenkwellendurchführung (14) zugewandten Ende zumindest einen seitlich auskragenden Vorsprung (42) aufweist, der zwischen dem Spannelement (34) und dem Deckel (18) angeordnet ist.

9. Kraftfahrzeugbaugruppe (1) nach einem der vorhergehenden Ansprüche, wobei:
der Mantel (28) mittels einer Schraub-, Bajonett-, Steck-, Rast- und/oder Schnappverbindung an der Abdeckungskonstruktion (18, 38) angeschlossen ist.

10. Kraftfahrzeugbaugruppe (1) nach einem der vorhergehenden Ansprüche, wobei:
die mindestens eine Leitung (26) zumindest eine elektrische Leitung, zumindest eine Kraftstoffleitung und/oder zumindest eine Pneumatikleitung umfasst; und/oder
die zweite Lenkwellendurchführung (14) frei von einer Lenkwelle (16) ist.

11. Kraftfahrzeugbaugruppe (1) nach einem der vorhergehenden Ansprüche, ferner aufweisend:
eine vorzugsweise als Trittschutz ausgebildete Schutzabdeckung (44), die die mindestens eine durch die zweite Lenkwellendurchführung (14) hindurchgeführte Leitung (26) und/oder die Abdeckungskonstruktion (18, 38) schützend abdeckt.

12. Kraftfahrzeugbaugruppe (1) nach einem der vorhergehenden Ansprüche, wobei die Konstruktion (10) aufweist:
einen ersten Abschnitt;
einen zweiten Abschnitt; und
einen angewinkelten Abschnitt, der zwischen dem ersten Abschnitt und dem zweiten Abschnitt verläuft und der vorzugsweise die erste Lenkwellendurchführung (12) und/oder die zweite Lenkwellendurchführung (14) umfasst,
wobei der Deckel (18), das Spannelement (34) und/oder das Gehäuse (38) am ersten Abschnitt und am zweiten Abschnitt gelagert ist und vorzugsweise den angewinkelten Abschnitt überspannt.

13. Kraftfahrzeugbaugruppe (1) nach einem der vorhergehenden Ansprüche, wobei die Abdeckungskonstruktion (18, 38) mit einem vorzugsweise umlaufenden Dichtelement versehen ist und das Dichtelement vorzugsweise mittels des Spannelements (34) gepresst wird.

14. Kraftfahrzeug, vorzugweise ein Nutzfahrzeug, mit einer Kraftfahrzeugbaugruppe (1) nach einem der vorhergehenden Ansprüche.

## Claims

1. Motor vehicle assembly (1), preferably cabin assembly, comprising:
a construction (10), preferably a floor construction, having a first steering shaft leadthrough (12) and a second steering shaft leadthrough (14);
a steering shaft (16) which is guided through the first steering shaft leadthrough (12);
at least one line (26) which is guided through the second steering shaft leadthrough (14); and
- a cover construction (18, 38) covering the second steering shaft leadthrough (14), wherein the cover construction (18, 38) has at least one opening (20), through which the at least one line (26) is guided,
- wherein the cover construction (18, 38) and the construction (10) are braced against each other via a clamping element (34), preferably tightly, and
- wherein the at least one line (26) is guided through the clamping element (34), and/or wherein the at least one line (26) is guided in a sheath (28) to the cover construction (18, 38), wherein the sheath (28) is preferably connected releasably to the cover construction (18, 38).

2. Motor vehicle assembly (1) according to Claim 1, wherein the at least one line (26) is tightly guided through the second steering shaft leadthrough (14).

3. Motor vehicle assembly (1) according to Claim 1 or Claim 2, wherein:
the first steering shaft leadthrough (12) and the second steering shaft leadthrough (14) are arranged mirror-symmetrically with respect to a central vertical plane of the construction (10), and/or
the first steering shaft leadthrough (12) is arranged on a driver's side of the construction (10) and the second steering shaft leadthrough (14) is arranged on a passenger's side of the construction (10).

4. Motor vehicle assembly (1) according to one of the preceding claims,
wherein an outer periphery of the cover construction (18, 38) is connected tightly to the construction (10) and/or bears tightly against the construction (10).

5. Motor vehicle assembly (1) according to one of the preceding claims, wherein the cover construction (18, 38) has a cover (18), wherein:
the at least one opening (20) is formed in the cover (18), preferably centrally, and/or
the cover (18) has angled end regions, and/or the cover (18) has at least one radial reinforcing rib (24).

6. Motor vehicle assembly (1) according to one of the preceding claims, wherein:
the cover construction (18, 38) is clamped in between the clamping element (34) and the construction (10), preferably tightly; or
the cover construction (18, 38) and the clamping element (34) are arranged on opposite sides of the construction (10) and are braced to each other, preferably for sealing between the cover construction (18, 38) and the construction (10).

7. Motor vehicle assembly (1) according to one of the preceding claims, wherein the clamping element (34) has a cross shape with a longitudinal beam and a transverse beam, wherein preferably:
the longitudinal beam is longer than the transverse beam, and/or
ends of the longitudinal beam are widened and/or rounded outwards, and/or
ends of the longitudinal beam are adapted to a contour of the second steering shaft leadthrough (14); and/or
ends of the longitudinal beam are angled, and/or each end of the transverse beam has a conical or U-shaped projection, and/or
in a section in which the longitudinal beam and the transverse beam intersect, at least one cut-out for leading through the at least one line (26) is formed, and/or
the clamping element (34) comprises a framework structure;
or
wherein the clamping element (34) is formed as a frame, preferably with an oval shape, wherein preferably:
end regions of the clamping element (34) are angled, and/or
end regions of the clamping element (34) have a framework structure, and/or
longitudinal sides of the clamping element (34) each have a conical or U-shaped projection, and/or
a reinforcing strut is formed in an opening of the clamping element (34), and/or
the clamping element (34) comprises a framework structure.

8. Motor vehicle assembly (1) according to one of the preceding claims, wherein the cover construction (18, 38) has a housing (38), through which the at least one line (26) is guided, wherein the housing (38) preferably:
is open on a side facing the second steering shaft leadthrough (14), and/or
protrudes preferably downwards from the cover construction (18, 38), and/or
has, at an end facing the second steering shaft leadthrough (14), at least one laterally projecting projection (42) which is arranged between the clamping element (34) and the cover (18).

9. Motor vehicle assembly (1) according to one of the preceding claims, wherein:
the sheath (28) is connected to the cover construction (18, 38) by means of a screw, bayonet, plug-in, latching and/or snap-in connection.

10. Motor vehicle assembly (1) according to one of the preceding claims, wherein:
the at least one line (26) comprises at least one electrical line, at least one fuel line and/or at least one pneumatic line; and/or
the second steering shaft leadthrough (14) is devoid of a steering shaft (16).

11. Motor vehicle assembly (1) according to one of the preceding claims, furthermore having:
a protective cover (44), preferably designed as a kick plate, which protectively covers the at least one line (26), which is guided through the second steering shaft leadthrough (14), and/or the cover construction (18, 38).

12. Motor vehicle assembly (1) according to one of the preceding claims, wherein the construction (10) has:
a first section;
a second section; and
an angled section running between the first section and the second section and preferably comprising the first steering shaft leadthrough (12) and/or the second steering shaft leadthrough (14),
wherein the cover (18), the clamping element (34) and/or the housing (38) are/is mounted on the first section and on the second section and preferably span/spans the angled section.

13. Motor vehicle assembly (1) according to one of the preceding claims, wherein the cover construction (18, 38) is provided with a preferably peripheral sealing element, and the sealing element is preferably pressed by means of the clamping element (34).

14. Motor vehicle, preferably a commercial vehicle, with a motor vehicle assembly (1) according to one of the preceding claims.

## Revendications

1. Ensemble pour véhicule automobile (1), de préférence ensemble de cabine, présentant :
une structure (10), de préférence une structure de plancher, comprenant un premier passage d'arbre de direction (12) et un deuxième passage d'arbre de direction (14) ;
un arbre de direction (16) qui traverse le premier passage d'arbre de direction (12) ;
au moins une conduite (26) qui traverse le deuxième passage d'arbre de direction (14) ; et
- une structure de recouvrement (18, 38) qui recouvre le deuxième passage d'arbre de direction (14), dans lequel la structure de recouvrement (18, 38) présente au moins une ouverture (20) à travers laquelle passe l'au moins une conduite (26),
- dans lequel la structure de recouvrement (18, 38) et la structure (10) sont serrées l'une contre l'autre, de préférence de manière étanche, par l'intermédiaire d'un élément de serrage (34), et
- dans lequel l'au moins une conduite (26) traverse l'élément de serrage (34) et/ou dans lequel l'au moins une conduite (26) est guidée dans une gaine (28) vers la structure de recouvrement (18, 38), dans lequel la gaine (28) est de préférence raccordée de manière amovible à la structure de recouvrement (18, 38).

2. Ensemble pour véhicule automobile (1) selon la revendication 1, dans lequel l'au moins une conduite (26) traverse de manière étanche le deuxième passage d'arbre de direction (14).

3. Ensemble pour véhicule automobile (1) selon la revendication 1 ou la revendication 2, dans lequel :
le premier passage d'arbre de direction (12) et le deuxième passage d'arbre de direction (14) sont agencés de manière symétrique par rapport à un plan vertical médian de la structure (10), et/ou
le premier passage d'arbre de direction (12) est agencé d'un côté conducteur de la structure (10) et le deuxième passage d'arbre de direction (14) est agencé d'un côté passager de la structure (10).

4. Ensemble pour véhicule automobile (1) selon l'une quelconque des revendications précédentes,
dans lequel une périphérie extérieure de la structure de recouvrement (18, 38) est reliée de manière étanche à la structure (10) et/ou s'appuie de manière étanche contre la structure (10).

5. Ensemble pour véhicule automobile (1) selon l'une quelconque des revendications précédentes, dans lequel la structure de recouvrement (18, 38) présente un couvercle (18), dans lequel :
l'au moins une ouverture (20) est réalisée dans le couvercle (18), de préférence au centre, et/ou
le couvercle (18) présente des zones d'extrémité coudées, et/ou
le couvercle (18) présente au moins une nervure de renfort radiale (24).

6. Ensemble pour véhicule automobile (1) selon l'une quelconque des revendications précédentes, dans lequel :
la structure de recouvrement (18, 38) est enserrée entre l'élément de serrage (34) et la structure (10), de préférence de manière étanche ; ou
la structure de recouvrement (18, 38) et l'élément de serrage (34) sont agencés sur des côtés opposés de la structure (10) et sont de préférence serrés l'un contre l'autre pour assurer l'étanchéité entre la structure de recouvrement (18, 38) et la structure (10).

7. Ensemble pour véhicule automobile (1) selon l'une quelconque des revendications précédentes, dans lequel l'élément de serrage (34) présente une forme en croix avec une barre longitudinale et une barre transversale, dans lequel de préférence :
la barre longitudinale est plus longue que la barre transversale, et/ou
des extrémités de la barre longitudinale sont élargies et/ou réalisées sous forme arrondie vers l'extérieur, et/ou
des extrémités de la barre longitudinale sont adaptées à un contour du deuxième passage d'arbre de direction (14) ; et/ou
des extrémités de la barre longitudinale sont réalisées sous forme coudée, et/ou
des extrémités de la barre transversale présentent chacune une saillie conique ou en forme de U, et/ou
au moins un évidement est réalisé dans une section où la barre longitudinale et la barre transversale se croisent, afin de permettre le passage de l'au moins une conduite (26), et/ou
l'élément de serrage (34) comprend une structure nervurée ;
ou
dans lequel l'élément de serrage (34) est réalisé sous la forme d'un cadre, de préférence avec une forme ovale, dans lequel, de préférence :
des zones d'extrémité de l'élément de serrage (34) sont réalisées sous forme coudée, et/ou
des zones d'extrémité de l'élément de serrage (34) présentent une structure nervurée, et/ou
des côtés longitudinaux de l'élément de serrage (34) présentent chacun une saillie conique ou en forme de U, et/ou
une entretoise de renfort est réalisée dans une ouverture de l'élément de serrage (34), et/ou
l'élément de serrage (34) comprend une structure nervurée.

8. Ensemble pour véhicule automobile (1) selon l'une quelconque des revendications précédentes, dans lequel la structure de recouvrement (18, 38) présente un boîtier (38) à travers lequel passe l'au moins une conduite (26), dans lequel de préférence le boîtier (38) :
est réalisé sous forme ouverte sur un côté tourné vers le deuxième passage d'arbre de direction (14), et/ou dépasse vers le bas de la structure de recouvrement (18, 38), et/ou
présente, à une extrémité tournée vers le deuxième passage d'arbre de direction (14), au moins une saillie (42) en porte-à-faux latéral, qui est agencée entre l'élément de serrage (34) et le couvercle (18).

9. Ensemble pour véhicule automobile (1) selon l'une quelconque des revendications précédentes, dans lequel : la gaine (28) est raccordée à la structure de recouvrement (18, 38) au moyen d'une liaison à vis, à baïonnette, enfichable, à encliquetage et/ou à enclenchement.

10. Ensemble pour véhicule automobile (1) selon l'une quelconque des revendications précédentes, dans lequel :
l'au moins une conduite (26) comprend au moins une conduite électrique, au moins une conduite de carburant et/ou au moins une conduite pneumatique ; et/ou
le deuxième passage d'arbre de direction (14) est exempt d'arbre de direction (16).

11. Ensemble pour véhicule automobile (1) selon l'une quelconque des revendications précédentes, présentant en outre :
un capot de protection (44) réalisé de préférence comme protection contre les chocs, qui recouvre de manière protectrice l'au moins une conduite (26) passant à travers le deuxième passage d'arbre de direction (14) et/ou la structure de recouvrement (18, 38).

12. Ensemble pour véhicule automobile (1) selon l'une quelconque des revendications précédentes, dans lequel la structure (10) présente :
une première section ;
une deuxième section ; et
une section coudée qui s'étend entre la première section et la deuxième section et qui comprend de préférence le premier passage d'arbre de direction (12) et/ou le deuxième passage d'arbre de direction (14),
dans lequel le couvercle (18), l'élément de serrage (34) et/ou le boîtier (38) sont montés sur la première section et sur la deuxième section et enjambent de préférence la section coudée.

13. Ensemble pour véhicule automobile (1) selon l'une quelconque des revendications précédentes, dans lequel la structure de recouvrement (18, 38) est pourvue d'un élément d'étanchéité de préférence périphérique et l'élément d'étanchéité est de préférence pressé au moyen de l'élément de serrage (34).

14. Véhicule automobile, de préférence véhicule utilitaire, comportant un ensemble pour véhicule automobile (1) selon l'une quelconque des revendications précédentes.
